# EUROPEAN PATENT SPECIFICATION

(11) **EP 1 175 538 B1**
(45) Date of publication and mention of the grant of the patent: **15.06.2005**
(21) Application number: 00922469.2
(22) Date of filing: 26.04.2000
(51) Int. Cl.: E04C 2/18

(54) **INSULATING PRODUCT COMPRISING FIXATION MEANS AND PROCESS FOR THE PRODUCTION AND MOUNTING THEREOF**
ISOLIERENDES PRODUKT MIT BEFESTIGUNGSMITTEL UND HERSTELLUNGS- UND BEFESTIGUNGSVERFAHREN HIERFÜR
ISOLANT COMPRENANT UN MOYEN DE FIXATION ET PROCESSUS DE PRODUCTION ET DE MONTAGE

(30) Priority: 29.04.1999 DK 59399
(43) Date of publication of application: 30.01.2002
(73) Proprietor: Rockwool International A/S, 2640 Hedehusene (DK)
(72) Inventor: CRIDLAND, Ian, DK-2720 Vanlose (DK)
(74) Representative: Sundien, Thomas
(86) International application number: PCT/DK2000/000208
(87) International publication number: WO 2000/066849

(56) References cited:
- EP-A- 0 004 086
- WO-A-95/27095
- DE-U- 9 410 133
- US-A- 5 310 594

## Description

The present invention relates to an insulating product having two main surfaces and a thickness between said surfaces and comprising a layer of an insulating material and at least one elongated fixation means for fixating the product, said fixation means extending in a first direction substantially parallel to at least one of the main surfaces, where said means at the most partially extends in the thickness direction of the product, said fixation means allowing for the attachment of the product to the structure to be insulated and/or to adjoining webs.

It is well known to provide buildings, pipes and other structures with insulating coverings in order to save energy. Through the time very efficient means of insulation have been provided in terms of e.g. webs of fibres or foam produced from inorganic or polymeric organic materials. The increased focus on saving energy and the widely spread use of such materials have led to also efficient methods of producing such insulating materials thus lowering their prices for the benefit of the consumer and the environment.

However, a significant amount of the costs of insulating various structures arises from the time spent on mounting the insulating material. Many structures which could benefit from insulation are not easily accessed or have other inherent properties making the insulating procedure troublesome, and thus costly. This, in essence, keeps many structures from being fitted with insulation, thus leading to unnecessary loss of energy.

In particular the insulation of pipes, ventilation conduits and other annular structures have proven troublesome, as the insulating material cannot normally be fastened directly to such structures with screws, nails or the like. Alternative means such as gluing are also often not possible due to high surface temperatures of the structures, fire hazard and/or health considerations.

One of the most common ways to insulate annular structures by using insulating products is by means of more or less prefabricated pipe sections. However, for large or uneven structures, or structures of non-circular cross-section it can be troublesome to obtain such prefabricated pipe sections and it is thus also known to use mats e.g. in terms of webs of an insulating material, and to wrap one or more such webs having a total length corresponding to the structure's circumference around the structure so that the two ends of the web meet or overlay and subsequently - by means of binding wires manually wrapped around the web - to secure the web to the structure at least temporarily. In particular mineral fibre webs are used in this manner, and they are often provided with a chicken wire at one side to keep the web together and for facilitating the handling and fixation thereof. Such a product provided with a chicken wire is disclosed in WO 95/27095.

The entire length of the structure can in this manner be clad by disposing a number of webs side-by-side where the combined width of the webs correspond to the length of the structure. For structures with large circumference it is also known in the art to combine a number of webs by sewing, gluing or the like to obtain a web of sufficient length to reach around the entire structure.

When the structure has been sufficiently clad with the insulating material, it is common to provide a more permanent fixation of the material. This can be done by various means such as further wires, sewing or stitching the adjoining edges of the webs together, wrapping the clad structure with a sheet of polymer or metal and/or by coating or impregnating the outer surface with a binding agent or the like.

EP-B1-0 004 086 discloses a mineral fibre web for insulating pipes. The mineral fibre web is composed by a number of lamellas which have been joined together by means of connecting means glued into tracks cut in the lamellas. According to EP-B1-0 004 086 the connecting means can be strings extending in the full length of the web, and which might comprise an excess part extending beyond the web in order to enable the fixation of the web by means of wrapping the strings around the web and/or by binding or tying using the freely extending parts of the strings.

As some webs used for this type of insulation are relatively heavy it might unfortunately be a problem that the typically used thin strings are not able to carry the weight of the insulation without being wrapped around the clad structure several times and/or without cutting into the insulating material even when glued into the web as disclosed. Furthermore, often the insulating worker has to insulate structures which are not easily accessed and it is inexpedient if the worker would have to wrap the excess part of the string one or more times around the structure while at the same time supporting the insulating material. In particular this is troublesome when insulating larger structures.

Even further, in order to ensure sufficient excess string to provide for fixation in various different situations it would be necessary to incorporate very long strings in the webs. Such long loose hanging strings might very well be in the way during handling and placement of the web. It is also inexpedient to have such long freely extending strings during the production or packaging of the insulating products. If only a limited excess string-length is provided, however, each length of web and/or string will consequently define a certain maximum of circumference which can efficiently be clad, in terms of how far the string can reach. This is of course also not an ideal solution.

When insulating structures in a fire hazardous environment it is also often undesirable to use insulating means comprising significant amounts of inflammable components such as glue and/or strings of cotton or the like as it is nevertheless suggested in EP-B1-0 004 086.

However, one of the major problems in the prior art seems to appear when insulating various structures of non-standard or uneven size. In these cases it is nearly always necessary to manually cut the insulating product in order to fit the surface to be insulated. Such cutting of the web is likely to lead to the cutting off of the free part of the connecting means, which then requires for other means of fixation. Obviously this is inexpedient and leads to wasted time and increased costs.

Accordingly it is an object of the present invention to overcome the shortcomings of the prior art, and to provide an insulating product of the mentioned kind which easily can be adjusted in size and/or shape and installed and fixed to itself, adjoining webs, the structure to be insulated or the like.

This is obtained by the insulating product according to the invention characterized in that the extent of the fixation means in said first direction can be extended substantially by means of pulling at least one end of the fixation means.

By enabling the elongation of the fixation means by pulling, preferably by hand, it is possible to obtain an insulating product without loose hanging strings or wires which might be interfering during producing, packaging, handling or mounting of the web.

The excess part of the fixation means protruding freely from the product after pulling the means can be used in any practically applicable way to secure the fixation means to another member by e.g. tying or binding, wrapping or twisting. According to the invention the fixation means is in a practical manner essentially stored within the product until the moment when it is called for. It is of course preferable that the end of the fixation means essentially extends to the boundary of the product so as to allow for the insulation worker to seize hold thereof and to apply the pull.

Another great advantage according to the invention is that the insulating product can be cut to any desired size or shape without the need for considering if the fixation means after cutting have the required length to provide for fixation. The inherent surplus length of the fixation means makes it possible to extend the means even after cutting of the web to the applicable length.

The surplus extent in terms of potential length or over length of the fixation means can be stored within the fixation means itself and/or the web in various ways. One preferable way is to use fixation means shaped as a spiral which, when pulled, straightens at least partially. Other preferred initial shapings of the fixation means comprise more or less periodical shapes or formations such as saw-tooth, sinus, squares and/or various kinds of loops, ripples, folds or windings, e.g. as a spring. The fixation means can of course be provided with more than one of said shapes, optionally in an overlaying manner.

It is preferred that the amplitude of these periodical shapes in general are around 2-300 times the thickness and/or diameter of the fixation means, preferably 3-150 and more preferably around 4-50.

If the fixation means is formed in particular as a spring or for other reasons has the capability to retract itself at least partly after being extended by the prescribed pull, it is furthermore advantageous to provide the means with fastening means in terms of hooks, claws or the like to enable it to attach easily to other objects such as the corresponding part of another fixation means or to the other end of itself and thereby facilitating the attachment procedure even further. In case the product is provided with a netting or a chicken wire the fastening means can of course also easily be attached thereto.

It is in some cases preferable that the fixation means in some points are fixed at least indirectly to the insulating product, so that pulling at one end of the fixation means does not result in that the other end of the fixation means becomes inaccessible and thus not available for use.

On the other hand, it is preferred only to fixate the means to the insulating product to such an extent that the product can be cut in substantially any desirable shape and/or size without losing the ability to provide for sufficient extension of the fixation means. Accordingly the fixation means can be attached directly and/or indirectly to the product in points at certain, preferably equidistant, intervals, e.g. by means of intermingling with the stitches known in the art for attaching chicken wire to mineral fibre webs as mentioned in WO 95/27095, and/or the attachment can be made in such a way that it can easily be sufficiently re-detached by the end user when called for. The fixation means can be attached directly and/or indirectly to the insulating product by gluing or hot melt, welding and/or stitching/sewing or the like.

However, the attachment of the fixation means to the insulating product can advantageously and preferably be provided by substantially only means of friction or the like inherent to the type, shape and/or placement of the means relative to the web as discussed below.

It is known in the art to make insulating composite products comprising several identical or different layers of insulating and other material, and it is known to provide such products and insulating webs in general with a layer in terms of a foil, e.g. of aluminium or polymer and/or a netting, e.g. in the form of a chicken wire as disclosed in WO 95/27095. The fixation means can according to the invention preferably be disposed between two layers within such a composite insulating product. It is however, also preferable to incorporate the fixation means into one of the layers. The latter being particularly preferable when only one layer is provided, i.e. in terms of the insulation material layer. The fixation means can be placed anywhere within such layer provided it allows for the prescribed operations.

As mentioned the fixation means can have a variety of shapes and be placed in a multitude of fashions within the product. It is however, in general preferable that the layering of the fixation means is not made in such a way that the prescribed pull leads to the insulating material being squeezed together, in particular in the thickness direction, as this might lead to poor insulating properties. This could e.g. be the case when the fixation means in its extent surrounds some of the insulating material, e.g. by penetrating the layer in the thickness direction in a number of stitches or the like. It is therefore preferable that the fixation means does not extend through the whole product in the thickness direction and in particular not through the full thickness of the insulating layer and in general that it essentially does not form loops around the insulating material. It is in most cases preferred that the means at the most partially extends in the thickness direction of the product by 90%, more preferable around or less than 50% and most preferable only insignificantly.

When the insulating product comprises a layer of a foil or a netting it is particularly preferred to place the fixation means directly beneath the foil and/or netting, i.e. between the adjoining surfaces of such layer and the insulating material.

By placing the fixation means as suggested in the above paragraphs it is possible to limit or even eliminate the use of means for directly attaching the fixation means to the insulating product. The mere frictional force between the fixation means and the surrounding material(s) is in most cases enough to secure a sufficiently firm hold on the fixation means, particularly when the fixation means as preferred extends in the full length and/or width of the product.

It is of course also preferable that the amount of possible extension as well as the ease by which the means is extended when pulled is weighed relative also to the strength and/or stiffness of the means. The desired extension is however, preferably obtainable by pull of the hand, without requiring the use of special tools. It is preferred that the deformation force required is between 0.5-100 N, more preferred around 5-50 N and even more preferred around 7-15 N. A typical value for the application of the present invention is around 10 N.

A typically applicable fixation means according to the invention has a strength of around 70-700 N/mm², preferably around 100-400 and has a stiffness of around 70-220*10³ N/mm² preferably around 100-150*10³ N/mm².

The particularly preferred fixation means suitable for application according to the present invention provides for an extension of around 20-120 % by means of a pull of around 5-25 N, even more preferably 25-75% by means of a pull of 7-15 N.

The fixation means according to the invention can in principle have any shape allowing for a secure fixation of the insulating product. One preferred type of fixation means originally has the basic form of a flat band or strip. Using such band the over length is preferably stored in folds of the band.

However, it has proven advantageous that the fixation means essentially have the basic shape of wires. Such wires can extend in the full length and/or width and/or thickness of the web, or it can be fixed directly or indirectly to the web at one end having the other end extending at least to one of the edges/surfaces of the web, provided the fixation means by pulling can be extended sufficiently beyond the edge of the web to provide for fixation of the web by binding or the like.

When using wires it is preferred that the diameter of the wire is adjusted to the properties of the web so that the wire substantially does not cut into the web. Alternatively and/or as a supplement, a protective layer can be placed between the wire and the insulation material. Such protective layer could advantageously, e.g. be a polymer and/or metal foil and/or a netting.

However, when a netting, e.g. in terms of a chicken wire, is employed it is preferred to have the fixation wire(s) placed under the netting, preferably directly under said netting. Alternatively it can be advantageous to weave the fixation means into the netting in order to confine the means at certain places. The latter principle could likewise be employed if a foil with holes is used.

The problem of the binding wire cutting into the insulation material is mostly expressed when the insulation layer is constituted by fibres, in particular mineral fibres and/or when the binding wires are thin.

According to a preferred embodiment of the invention wires of a essentially non-inflammable material are used.

According to another particularly preferred embodiment of the invention wires of a metal or the like are used as fixation means. Most metal wires can easily be twisted together creating a firm hold. This provides the advantage that no complicated knots need to be tied in order to provide the fixation. This advantage is even obtainable by one hand, which is a great improvement over the need to use both hands as known in the prior art. By using only one hand for twisting e.g. the adjoining wire ends together leaves the other hand free for supporting the web - keeping the web in place,- or for other tasks.

A further advantage of using metal wires as fixation means is that they for some purposes can at least partly substitute an otherwise necessary chicken wire. It has surprisingly proven possible to completely substitute the chicken wire of a standard wired product, e.g. as disclosed in WO 95/2795, by placing a number of fixation means in accordance with the invention in the full length and/or width of the product. The fixation means are preferably in such case placed at a mutual distance of 5-50 cm, preferably around 10-25 cm, and even more preferable around 10 cm. When, as preferred for eliminating the need for a chicken wire, the wires are placed in both the length and width direction of the product, i.e. two preferably more or less mutually perpendicular directions, it is particularly preferred to weave the wires or loosely hold them together with thin threads or the like so that they in combination constitute an essentially self-supporting netting. In this manner the advantages of a netting is provided even though the individual fixation means is not limited by being welded or in other ways firmly attached to the other means, as it e.g. is the case of the wires forming an optionally applied chicken wire.

In particular when insulating horizontally extending pipes or the like it is a well known problem in the art that the prior art insulating material has a tendency to sag, i.e. the insulating material does not provide a perfect tight encapsulation. It is therefore an advantage of the present invention over the prior art products that it allows for a good firm mounting even on horizontal structures.

Furthermore, it has surprisingly proven possible, in particular when the fixation means are in terms of metal wires, to apply certain well known tools in a new manner providing for a particularly expedient way to mount the insulating products according to the invention. Such tools comprise "yankee-screwdrivers" and packing-needles.

It is even further possible to apply special tools and/or adapters for existing tools working like tweezers or the like and adapted so as to enable the gripping of first one end of a fixation means and then one end of another fixation means, or the gripping of both at substantially the same time, and subsequently allowing for an easy twisting of the ends to create a firm hold. The two fixation means ends can of course be each end of the one and same fixation means, as well as more than two such ends of several can be joined in the prescribed manner.

Such tools are preferably provided with a motor or the like for performing the twisting motion, i.e. like it is known from electrical drills or screwdrivers, and the tools are preferably cordless/rechargeable. Alternatively such tools are adapted to provide for the twisting motion by mechanical means in terms of e.g. a build-in screw with high pitch.

Another advantage of using metal wires is that the excess length does not need to be long when no knot or wrapping is needed. Furthermore, due to the properties of most metals, it is assured that the wound up excess extension of the fixation means stay in place, even when the insulating product is treated in a rough manner. Even further, it appears that it is particularly easy to adjust the force needed for pulling out the required amount of fixation means, by adjusting the composition of used metal, the dimensions of the used metal and/or the selected way of storing the excess part of the fixation means.

Metals applicable for the fixation means comprise aluminium, iron, various iron alloys such as steel and/or copper. It is particularly preferred to use steel or iron wires due to strength and price. It is furthermore, in general preferred to use metal that have high durability as well as corrosion resistance. The corrosion resistance can be obtained by galvanisation with e.g. zinc.

Preferable alternatives to metals for use as fixation means comprise polymers and/or glass wires. In particular deformationable polymers and/or elastomers are preferred, i.e. materials which themselves allow for an extension, without having to be layered in a particular manner.

The metal wires or other used wires can advantageously be coated or wrapped with other materials such as polymers and/or paper. This can make the diameter of the wire larger and prevent the wires from cutting into the insulating layer. It is also possible to use such coating or wrapping as a sleeve to obtain a telescopic effect so that the inner core can be extended beyond the coating or wrapping.

According to another embodiment of the invention the fixation means are provided with visible colours to ensure the easy identification thereof at the place of mounting. Colours which are readily distinguished from the insulating material and/or other constituents of the insulating product are preferred. As the insulation often can take place in places with pour light it is particularly preferred to employ bright or luminescent colours.

It is thus a particularly preferred embodiment of the present invention to employ metal wires provided with a visibly coloured coating. In this way costly metal can be saved while at the same time providing sufficient flexibility and strength, sufficiently large diameter and an easy visible identification of the fixation means.

It is of course possible according to the invention to incorporate several fixation means having different properties and indicating each property by a specific colour code.

The invention also relates to the use of the insulating products according to the invention for insulation purposes, in particular for insulating annular structures.

The invention furthermore, relates to a process for the preparation of an insulating product having at least one substantially planar surface, comprising a layer of and insulating material and an elongated fixation means having a certain length and extending a first distance in a direction substantially parallel to the surface, where the process comprises the step of at least partially attaching the fixation means at least indirectly to the insulating material, characterized in that the fixation means is severed into such a shape that the actual length of the means is at least 5% longer than the first distance and in such a way that the fixation means by means of pulling can be at least partly straightened out to extend beyond said first distance.

The over-length generally provided by the process according to the invention and being applicable for the insulating products according to the invention is 10-50%, preferably 15-40% and more preferably 20-30%. However, when the product is to be fixed by hand, e.g. by means of binding, tying or manual twisting is preferred that at least 5-15 cm., preferably around 10 cm., extension is obtainable at each end of the fixation means in order to facilitate the process.

It is also possible to fit the products with fixation means of a very large amount of over-length, e.g. 50-200%, preferably around 60-100%, but even more preferable 70-90% in order to allow for the fixation means to partly or completely substituting the binding wire commonly used for stitching or sewing prior art insulating products together after the preliminary mounting of such.

When using metal wires and/or items with similar properties as fixation means in the production of the insulating products according to the invention, it is preferable to shape these wires in a way to induce as little stress as possible within the wire material. This is preferably done by shaping in smooth curves rather than edgy curves. Although saw-tooth and/or square wave-forms are efficient and advantageously can be employed according to the invention, it is particularly preferably to employ rounded loops or wave-forms, e.g. substantially a sinus wave-form.

According to a preferred embodiment of the process according to the invention the extension means can be shaped by running it between a number of more or less engaging gear-wheels. Although a saw-tooth-like shape could be expected by such treatment, it has surprisingly been found, that the fixation means obtains a relatively rounded wave shape, in practice close to a sinus wave form.

Such an advantageous shaping of the fixation means is obtainable using ordinary gear-wheels as known in the art; and good results are easily obtainable by selecting the size and number of gear-wheels, the height and shape of the teeth as well as the amount of engagement of opposing wheels dependent on the dimensions of the fixation means.

For wires, e.g. comprising metal, in particular the generally preferred steel wires, having a diameter from around 0.3 to around 1.5 mm, preferably 0.5-1.0 mm, and even more preferably around 0.7 mm., surprisingly good results can be obtained using two gear-wheels engaging to such a depth that the above mentioned over-lengths can be obtained. Preferred gearwheels for use according to the invention comprises all known gearwheels providing for the said folding of the fixation means. Preferable gearwheels for use with wire of the above dimensions include in particular gear wheels having a diameter of 75-200 mm, preferably around 120 mm, having around 15-30 teeth, preferably around 22, being around 5-15 mm of height, preferably around 10 mm, said gearwheels engaging around 3-12 mm, preferably around 5-10 mm.

Alternatively and/or in combination with the above mentioned method, the fixation means can be severed into the prescribed shape(s) by using, e.g. a principle of the same kind as it is known from sewing machines to bend and/or even attach the means to the product. Such machine could be an excentric mounted device, or even a gear wheel with protrusions engaging the fixation means with the netting, - even before the assembling of the chicken wire and the insulating layer.

According to preferred embodiments of the process according to the invention it is preferred to use mineral fibre based insulating materials and to provide these with the prescribed fixation means as a step in a substantially continuous production process. Such a substantially continuous process can advantageously start with a formation of a mineral fibre web as it is known in the art and, e.g. as disclosed in EP 0 551 334, whereafter the mineral fibre web is provided with the fixation means according to the invention.

This can for instance be done by conveying the continuous web from the place of formation on a conveyor band through a zone where the fixation means is introduced to the web. The fixation means is typically prefabricated wires or the like which are prior to use stored on one or more supply reels, however, the fixation means can also be produced at the spot and/or in situ. This method, of course is applicable to essentially all kinds of insulating material.

Furthermore, the prefabricated fixation means can be provided with one or more of the prescribed shapes per se and/or the inherent ability to allow for the prescribed extension by pulling. However, it has proven advantageous due to the storage of the fixation means, preferably on reels or the like, to introduce the prescribed shape(s) to the fixation means after it leaves the supply reel and substantially immediately prior to the introduction to the insulating product. In this way a more efficient storage of the raw material for the fixation means, e.g. in terms of straight steel wires, can be obtained.

Furthermore, it is thus possible to use the same raw material for fixation means having different properties, i.e. by inducing various shapes depending on the specific application and/or generally the amount of over-length (potential extension) of the fixation means is desired for any specific purpose.

The fixation means can be attached to the insulating material in a number of ways, i.e. by gluing,- comprising in particular by use of hot melt,- sewing, stitching or the like. The fixation means can also be indirectly attached to the insulating material if the insulating product comprises other constituents allowing for the attachment of the fixation means thereto.

Where the insulating product comprises metal and/or a weldable material, e.g. in terms of a thermoplastic material, it can also be welded to said material or hot melted thereto.

When the fixation means is attached to the insulating product, it is preferred that it is done in such a way that the insulation worker at the workplace easily can detach the fixation means completely or partly if called for. It has for this purpose proven particularly advantageous to attach the fixation means to the product by means of hot melt in a number of points along the extension of the fixation means or by using thin or loose threads in a similar manner.

Accordingly it is a preferred embodiment of the process according to the invention to provide the interface between the fixation means and the insulating product with an amount of softened or molten hot melt continuously along said interface and/or at discrete points. This is preferably done in the production zone, where the fixation means is introduced to the insulating product.

For fixation means not extending the entire way from one edge of the product to another, it is preferred that the fixation means is attached firmly at the end not being pulled. For relatively small products it can similarly be advantageous to provide a firm hold on the attachment means relative to the rest of the product, e.g. on the middle.

A particularly preferable way to attach the fixation means to an insulating product according to the invention and comprising any kind of covering attached to the insulating layer, is to place the fixation means between the facing surfaces of the insulating material layer and the covering. In this case it is of course furthermore, possible to apply the above mentioned means for attaching the fixation means to the covering and/or the insulating layer. It is however, even more preferable to let the fixation means be kept in place by the frictional forces acting between the materials.

For insulating products typically employed in high temperature insulation purposes it is common that mineral fibres webs are provided with a chicken wire covering attached to the web by, e.g. stitching. In such cases it is preferable according to the invention to use fixation means in terms of one or more steel wires severed into substantially any of the prescribed shapes disclosed herein and to place it under the chicken wire as disclosed above. Surprisingly this has proven to firstly provide sufficient hold on the fixation means to ensure that it stays in place during transportation and secondly to ensure that when pulled at one end, the fixation means will be extended by unfolding in the direction pulled rather than being pulled out of the product. The hold on the fixation means can easily be modified to suit the situation by selecting the suitable dimensions and shape of the fixation means.

A clear advantage of substantially only indirectly attaching the fixation means to the insulating product is that the product can be cut in almost any way without affecting the attachment.

Another preferable way to provide the insulating product with attachment means, is to incorporate the attachment means into the insulating material layer. This can be done by feeding the fixation means to the insulating material at a suitable place, where it by means of folding of the insulating material and/or by suitable layering of newly formed insulating material becomes integrated in the insulating material.

Further embodiments of the present inventions include the possibility of modifying the optionally used chicken wire itself or elements thereof in the same way as suggested above regarding wires. Hereby the thereby induced over-length of the wire or said elements can be stretched out as described and used for fixation the product to adjoining elements, products or structures. One element particularly suitable for such manipulation, is the edge-wire of the chicken wire.

The typical insulating product according to the invention is a matt shaped more or less rectangular structure having two main surfaces and 4 side surfaces, i.e. two at the ends and two along the sides. The product can however, have other shapes known in the art of insulating products such as triangular. The main surface planes are preferably more or less parallel.

The invention furthermore relates to a process for mounting an insulating product by fixating it to a member, said product having two main surfaces and a number of side surfaces and comprising an insulating layer and one or more extendible elements extending in a direction substantially parallel to at least one of the main surfaces and substantially to at least one side surface, said process comprising the steps of
a) seizing hold of a part of said element at the side surface,
b) pulling the part to extend the element so as to protrude beyond the side surface,
c) fixating the product by attaching the protruding part to the member.

According to the invention the member is adapted to engage with the element. Such adaptation comprises the presence of eyes, holes, wires, edges, bars or any other means capable of reception of the element, i.e. the fixation means.

According to a preferred embodiment of the process according to the invention step c is performed by tying or binding the protruding part to, and/or wrapping or twisting the protruding part around a suitable part of the member to which the product is to be secured. Such member can advantageously be the product itself, a neighbouring similar or identical product, the structure to be insulated or any other suitable adjoining member.

In case the product is mounted on an annular structure it is preferable that the process further comprises the step of cutting the product to fit the circumference before mounting the product on said structure.

In order to facilitate the tying or binding, twisting or wrapping it is preferable that the element is extended to protrude at least 5-10 cm beyond the boundary of the insulating layer.

According to the process for mounting an insulating product according to present invention it is of course preferable that the product is as described above.

The invention also relates to an apparatus for applying fixation means (5) to an insulating product comprising means for conveying an insulating product comprising an insulating material layer 1, means 6 for dispensing an elongated fixation means 5 and optional guides 9 for bringing the fixation means (5) in contact with the insulating product, characterized in that said apparatus comprises at least one pair of at least partially engaging gear wheels 8' and 8", optional guides for passing the fixation means (5) between said gear wheels 8' and 8", means for securing the fixation means (5) to the product at least indirectly in such a manner that the extent of the fixation means (5) can be extended in a first direction by substantially pulling at least one end of the fixation means (5).

A particularly preferred embodiment of the apparatus comprises a separate set of gear wheels 8 for each fixation means 5. In this embodiment it is particularly preferable to employ guides to bring the fixation means to run between the gear wheels.

In another preferred embodiment the gear wheels induces a standardised over-length of the fixation means which is then partly straightened out again before attachment of the fixation means to the product by adjusting the speed of conveyance of the product relative to the conveyance of the fixation means or vice versa. In this way the desired amount of over-length of the fixation means can be controlled accurately and continuously without having to change the gear wheel dimensions. This process poses a very simple way to provide a wide variety of products according to the invention, in which the amount of over-length of the fixation means is adjusted to specific purposes.

The means for conveying the insulating structure could be any kind of conveying means suitable, e.g. a conveyor belt and/or a wire.

The guides could be any means capable of controlling the position of the fixation means, e.g. rollers, bobbins, slide bearings, eyes or the like.

The means for securing the fixation means to the structure could be nozzles for spaying glue or hot melt onto the interface between the fixation means and the structure, a "sewing machine" for stitching the fixation means to the structure or the like. Where the structure and/or the fixation means is provided with a weldable material the means for securing could be in the form of a spot welder or a soldering apparatus or the like.

In case of using a sewing machine to attach the fixation means, the latter may advantageously be placed along the sewing line in such a way that the sewing thread zigzags back and forth over the fixation means.

Another preferred way to secure the fixation means to the product is to provide the means with one or more barbs which engages with the product and keeps it sufficiently attached thereto. In this case no other means of attachment is necessary. This embodiment of the invention is particularly suitable when the fixation means is to be mounted directly on a mineral fibre insulation layer. Most mineral fibre products are soft enough to allow for a some penetration of the surface layer by such barbs and are still sufficiently firm to keep the fixation means attached.

The barbs can of course be attached in much the same way as is known from the art of barbed wires. One particularly preferable way to provide the fixation means with barbs, however, is to bend the fixation means, so that the fixation means itself forms a number of barbs. This is particularly expedient when the fixation means is in the form of a metal wire. No particularly sharp bending of the wire is necessary to provide for a sufficient hold, when such fixation means is attached directly to most mineral fibre insulation webs. The barbs are preferably oriented in the various directions necessary to keep the means in place as well as for providing sufficient resistance for the extension by pulling. It is of course particularly expedient if also the barbs to some degree can provide for the storage of over length of the means.

Another particularly preferable way to make the fixation means for application according to the present invention is to make the extendible property as loops around the sewings or stitches, the loop being preferably 10-70 mm, and even more preferably around 30-50 mm in diameter. The loops are laid out in front of the sewing needle whereafter the needle automatically hits within the loop, preferably at or around the centre. By this preferred embodiment the loops will have an equidistance of around 200-700 mm, preferably 300-400 mm and will always be able to provide a more or less fixed extension (over length) when pulled essentially no matter how the product is cut, i.e. as only the first loop from the pulled end will straighten out. This is due to the fact that as the first loop is straightened out it will more or less lock around the nearest stitch and thus in most cases provide sufficient hold of the fixation means relative to the product.

The term extent as used herein defines the length of an item in a certain direction, i.e. the distance covered by the item in said direction, regardless the actual length of the item.

The actual or full length of an item as used herein defines substantially the theoretical, potential and/or practically obtainable full length of the item when unwound, unfolded, stretched and/or straightened out or before any "shaping" thereof. The term over length is used to designate the amount of fixation means ultimately available for binding, tying, twisting or wrapping.

The insulating material used in accordance with the various aspects of the present invention can in principle be composed by any known insulating material, i.e. by organic and/or inorganic fibres or foam. However, it is preferred according to the invention to use mineral fibre based insulating material. Such mineral fibre based product can comprise a number of other materials, e.g. an amount of binding agent. The insulating material is preferably substantially non-woven.

The term mineral fibre as used herein comprises all types of man-made mineral fibres, such as rock, glass or slag fibres, in particular fibres used in materials for the above purposes, and as filler in cement, plastics or other substances, or which are used as culture medium for plants. The most preferred mineral fibre material according to the invention is based on rock fibres.

The terms tying or binding, twisting or wrapping as used herein designates all any process capable of providing a firm hold where the fixation means is more or less intermingled and/or engaged with another object. Tying or binding relates primarily to the use of flexible materials and attachment by means of any known type of knot. Twisting or wrapping primarily relates to the use of more or less bendable stiff materials such as metals and attachment by means of any other kind of intermingling or engagement.

The term rock fibre as used herein designates fibres having a composition comprising generally around 34-62 % and preferably around 41-53 weight-% SiO₂, generally around 0.5-25 weight-% and preferably around 5-21 weight-% Al₂O₃, optionally around 0.5-15 weight-% and preferably around 2-9 weight-% total iron oxides, generally around 8-35 weight-% and preferably around 10-25 weight-% CaO, generally around 2.5-17 weight-% and preferably around 3-16 weight-% MgO, optionally around 0.05-1 weight-% and preferably around 0.06-0.6 weight-% MnO, generally around 0.4-2.5 weight-% and preferably around 0.5-2 weight-% K₂O, and further comprising Na₂O in an amount of less than around 5 weight-%, preferably less than around 4 weight-% and more preferably between around 1 and 3.5 weight-%, TiO₂ in an amount of more than around 0.2-2 weight-%. Preferably rock fibres does not comprise BaO or Li₂O in any significant amount and the content of B₂O₃ is preferably less than 2%. Rock fibres typically have a glass transition temperature (Tg) above 700 °C, preferably above 730 °C and more preferably between around 760 and 870 °C. The density of rock fibres are typically above around 2.6 g/cm³ and preferably between around 2.7 and 3 g/cm³. The refractive index of rock fibres are typically above around 1.55 and preferably between around 1.6 and 1.8.

The term binding agent as used herein comprises any material which is suited as binding agent in mineral fibre materials for the above products, e.g. organic binders such as phenol formaldehyde urea, acrylic-copolymer, resorsinole, furan or melamine resin and/or inorganic binders such as aluminum phosphates or silicon containing binders such as silica sol or water glass. Such binding agents are preferably supplied to the mineral fibre material in the form of aqueous suspensions. It is, however, also preferable to used thermoplastic binding agents, e.g. fibres or particles comprising one or more thermoplastic materials such as thermoplastic polymers.

The invention will in the following be illustrated further by reference to the drawings, wherein
Fig. 1 illustrates in side view a preferred embodiment of the process and apparatus according to the present invention.
Fig. 2 illustrates in perspective view another preferred embodiment of the process and apparatus according to the present invention.
Fig. 3 illustrates an embodiment of the insulating product according to the invention.
Fig. 4 illustrates in perspective view of a preferred embodiment of the product according to the invention.
Fig. 5 illustrates an embodiment of the insulating product according to the invention mounted on a pipe.
Fig. 6 illustrates a deformation curve of a preferred fixation means according to the invention compared with a binding wire without extension property.

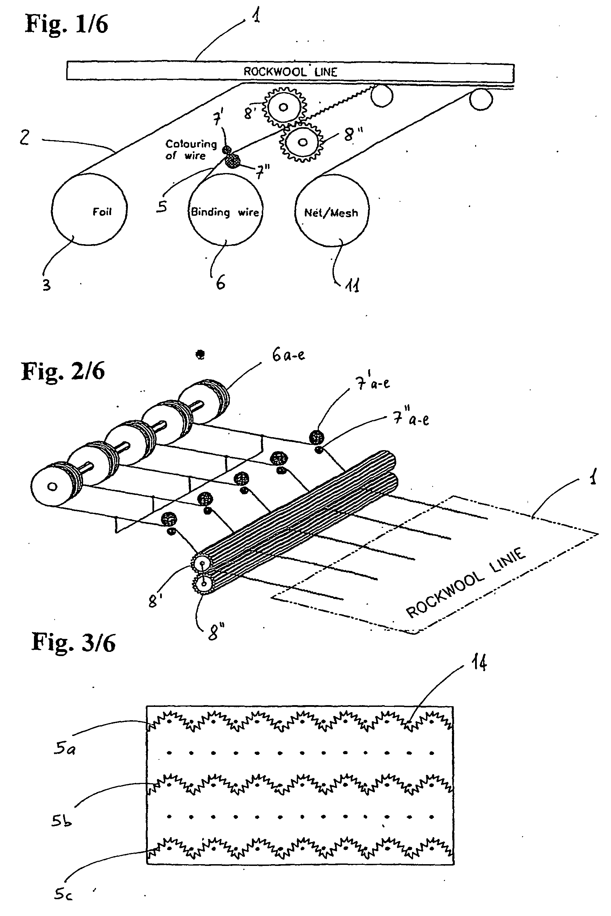

In fig. 1 a mineral fibre based insulating web 1 is conveyed by conveying means (not shown) and provided with; a foil 2 comprising aluminium dispensed from reel 3 and controlled by a guide, and fixation means in terms of a steel wire 5 dispensed from reel 6, coloured by passing it through colouring rollers 7' and 7", severed into a wave form by passing it through the teeth of engaging gear wheels 8' and 8" and controlled by guide as well as a chicken wire 10 dispensed from reel 11 and controlled by guide 12. The chicken wire is subsequently secured to the web by stitching as it is known in the art of mineral fibre based high temperature/fireproof insulating material (means not shown).

In fig. 2 steel wires 5a-e are dispensed from reels 6a-e through guide(s) 13 through colouring rollers 7'a-e and 7''a-e to pass between gear wheels 8' and 8" onto the mineral fibre based insulating web 1. The steel wires (fixation means) are subsequently secured in a loose manner to the web by stitching with thin cotton or iron threads or by hot melt spots (means not shown).

Fig. 3 illustrates a top view of an insulating product according to the invention where fixation means 5a-c extends in the full length of the insulating layer 1 and where the fixation means are layered so as to zigzag between the stitches symbolised by dots 14. The (optional) chicken wire as well as the stitching threads are not shown.

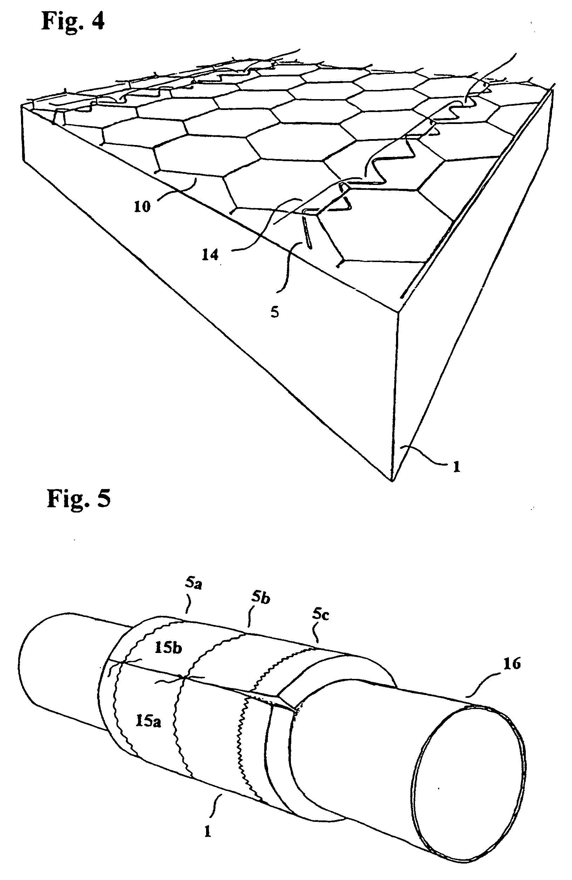

Fig. 4 illustrates in perspective view a preferred embodiment of the product according to the invention where an insulating layer 1 in terms of a mineral fibre web is provided with a chicken wire 10 which is fastened to the insulating layer 1 by means of a iron thread 14 stitched through the insulating layer. A fixation means 5 in terms of a galvanised iron wire in zigzag configuration is placed under the chicken wire 10.

Fig. 5 illustrates an embodiment of the insulating product according to the invention mounted on a pipe 16, where the product comprising insulating layer 1 is adapted to fit the circumference of pipe 16 and fixation means 5a and 5b extending around the mounted product secures the product on the pipe 16 by knots 15a and 15b. The fixation means 5c has not yet been extended to protrude beyond the adjoining end surfaces of the product to enable the fixation thereby.

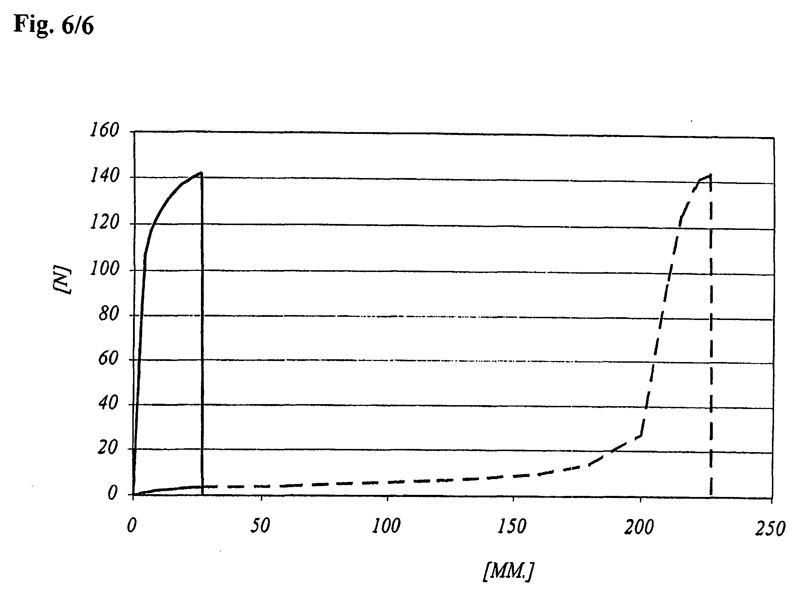

Fig. 6 illustrates deformation of a 330 mm fixation means with and without zig-zag. The figure illustrates a standard deformation curve of a preferred fixation means according to the invention in terms of applied deformational force on the Y-axis and obtained deformation/extension on the X-axis.

Curve a illustrates the deformation of a straight 330 mm long ⌀ 0.7 mm galvanised iron wire.

Curve b illustrates the deformation of an identical wire provided with a zigzag/sinus configuration obtained as described above using gear wheels and having an amplitude of approximately 8 mm. The initial length of wire b before inducing the zigzags was around 555 mm and the initial extent of the wire in the direction of the applied force was as above 330 mm. The curve shows that the zigzag configuration provides for a 50% extension relative to the initial extent of 330 mm by a pull of only around 10 N.

It is furthermore seen from the curves that the strength of the wire is not adversely affected by the zigzag configuration, as both wires break at the same applied maximum force of around 140 N.

The invention will in the following be further illustrated by means of examples:

### Example 1:

A ⌀350 mm horizontally extending ventilation duct is to be insulated with a 50 mm insulation layer. An insulation product in terms of a matt according to the invention comprising such insulating layer is cut to fit the circumference of 1414 mm. After cutting 5 coloured fixation means are identified at each end of the matt and pulled by the hand to extend approximately 100 mm beyond the side surface of the product. The matt is the placed over the duct to hang loosely downwards and the 5 pairs of corresponding free fixation means ends from each matt end are easily identified, brought together and twisted to secure the matt in a tight manner around the duct.

### Example 2:

An upright standing essentially cylindrical boiler comprising spacing irons extending in the height of the boiler is to be insulated at the surfaces between said irons. In this case a suitable number of products according to the invention having a chicken wire at one side and having fixation means provided in both the width and length directions of the product under the wire are used. First the products are cut to fit between the spacing irons. Thereafter the fixation means in the width direction are extended by pulling and subsequently spot welded to the irons so that the chicken wire faces the exterior and the insulating layer faces the surface of the boiler. Where applicable the adjoining insulating products are attached to each other by means of the available build in fixation means.

After the first layer of insulation has been applied to the boiler, a second layer is prepared in order to clad the entire structure including the first layer of insulation. As both the height and the circumference of the boiler is larger than the standard available insulating product according to the invention, a number of such products are joined together using the integrated fixation means in order to obtain a full closed insulation of the boiler. After the entire structure has been tightly wrapped in the applicable number of products according to the invention and the fixation means comprised in said products have been fixed to neighbouring members providing for such, no further fixation of the insulating products should prove necessary.

## Claims

1. An insulating product having two main surfaces and a thickness between said surfaces and comprising a layer (1) of an insulating material and at least one elongated fixation means (5) for fixating the product, said fixation means (5) extending in a first direction substantially parallel to at least one of the main surfaces, where said means at the most partially extends in the thickness direction of the product, **characterized in that** the extent of the fixation means (5) in said first direction can be extended substantially by means of pulling at least one end of the fixation means (5).

2. An insulating product according to claim 1 **characterized in that** the fixation means (5) extends less than 90 % in the thickness direction of the insulating layer (1).

3. An insulating product according to any of the preceding claims, **characterized in that** the fixation means (5) is capable of being extended by at least 5% by a pull of the hand in the said direction.

4. An insulating product according to any of the preceding claims, **characterized in that** the fixation means (5) extends substantially from one side surface to another.

5. An insulating product according to any of the preceding claims, **characterized in that** the fixation means (5) is a wire.

6. An insulating product according to claim 6, **characterized in that** the fixation means (5) has a diameter of 0.3-1.5 mm.

7. An insulating product according to claim 5, **characterized in that** the fixation means is bent in the shape of a wave, preferably a sinus, saw-tooth or square wave.

8. An insulating product according to any of the preceding claims, **characterized in that** the fixation means (5) comprises metal, preferably steel.

9. An insulating product according to any of the preceding claims, **characterized in that** the fixation means (5) has a strength of 70-700 N/mm².

10. An insulating product according to any of the preceding claims, **characterized in that** the fixation means (5) is extendible by 25-75% by means of a pull of 7-15 N.

11. An insulating product according to any of the preceding claims, **characterized in that** the product comprises at least at one of its main surfaces a covering layer comprising a foil.

12. An insulating product according to any of the preceding claims, **characterized in that** the product comprises at least at one of its main surfaces a covering layer comprising a web or chicken wire.

13. An insulating product according to any of the preceding claims, **characterized in that** the fixation means (5) is placed between the covering and the insulating material.

14. An insulating product according to any of the preceding claims, **characterized in that** the fixation means (5) are placed on the outside of the covering and at least indirectly is attached thereto.

15. An insulating product according to any of the preceding claims, **characterized in that** the fixation means (5) is weaved into the covering.

16. An insulating product according to any of the preceding claims, **characterized in that** the insulating material comprises mineral fibres.

17. Use of the insulating product according to claims 1-16 for insulating purposes, particularly for insulating annular structures.

18. Process for mounting an insulating product by fixating it to a member, said product having two main surfaces and a number of side surfaces and comprising an insulating layer and one or more extendible elements extending in a direction substantially parallel to at least one of the main surfaces and substantially to at least one side surface, said process comprising the steps of
a) seizing hold of a part of said element at the side surface,
b) pulling the part to extend the element so as to protrude beyond the side surface,
c) fixating the product by attaching the protruding part to the member.

19. Process according to claim 18 **characterized in that** the member is adapted to engage with the protruding part.

20. Process according to claim 18 or 19 **characterized in that** step of fixating the product by attaching the protruding part to the member is performed by tying or binding the protruding part to, and/or wrapping or twisting the protruding part around a suitable part of the adjoining member.

21. Process according to claims 18-20 **characterized in** further comprising the step of cutting the product to fit the circumference of an annular structure before mounting the product on said structure.

22. Process according to claims 18-21 **characterized in that** the member forms part of the product itself.

23. Process according to claims 18-21 **characterized in that** the adjoining member is a substantially identically product.

24. Process according to claims 18-23 **characterized in that** the element is extended to protrude at least 5 cm beyond the boundary of the insulating layer.

25. Process according to claims 18-24 **characterized in that** the insulating product is according to any of the claims 1-15 and that said element is a fixation means of the product.

26. Process for the preparation of an insulating product having at least one substantially planar surface comprising a layer of an insulating material and an elongated fixation means having a certain length and extending a first distance in a direction substantially parallel to the surface, where the process comprises the step of at least partially attaching the fixation means at least indirectly to the insulating material, **characterized in that** the fixation means is severed into such a shape that the actual length of the means is at least 5% longer than the first distance and in such a way that the fixation means by means of pulling can be at least partly straightened out to extend beyond said first distance.

27. A process according to claim 26, **characterized in that** the fixation means is bent in the shape of a wave.

28. A process according to claim 26 or 27, **characterized in that** the wave-form substantially describes a sinus, saw-tooth or a square wave.

29. A process according to claims 20-28, **characterized in that** the fixation means is conveyed between a pair of mutually engaged gear-wheels.

30. A process according to claims 26-29, **characterized in that** the fixation means is wound in loops.

31. Apparatus for applying fixation means (5) to an insulating product comprising means for conveying an insulating product comprising an insulating material layer (1), means (6) for dispensing an elongated fixation means (5) and optional guides for bringing the fixation means (5) in contact with the insulating product, **characterized in that** said apparatus comprises at least one pair of at least partially engaging gear wheels (8; 8"), between which the fixation means passes, optional guides for passing the fixation means (5) between said gear wheels (8; 8"), means for securing the fixation means (5) to the product at least indirectly in such a manner that the extent of the fixation means (5) can be extended in a first direction by substantially pulling at least one end of the fixation means (5).

## Patentansprüche

1. Isolationsprodukt, das zwei Oberflächen und eine Schicht zwischen den Oberflächen aufweist und aus einer Schicht (1) aus einem isolierenden Material und mindestens einem verlängerten Befestigungsmittel (5) zur Befestigung des Produktes besteht, die Befestigungsmittel (5) erstrecken sich in eine erste Richtung im Wesentlichen parallel zu mindestens einer der Hauptoberflächen, wo sich das Mittel höchstens teilweise in Richtung der Schicht des Produkts erstreckt, **dadurch gekennzeichnet, dass** die Ausdehnung des Befestigungsmittels (5) in der ersten Richtung im Wesentlichen durch Ziehen von mindestens einem Ende des Befestigungsmittels (5) verlängert werden kann.

2. Isolationsprodukt, entsprechend des Anspruchs 1, **dadurch gekennzeichnet, dass** sich das Befestigungsmittel (5) über weniger als 90 % in Richtung der Isolationsschicht (1) erstreckt.

3. Isolationsprodukt, entsprechend der vorstehenden Ansprüche, **dadurch gekennzeichnet, dass** das Befestigungsmittel (5) um mindestens 5 % verlängert werden kann, indem mit der Hand in die Richtung gezogen wird.

4. Isolationsprodukt, entsprechend der vorstehenden Ansprüche, t **dadurch gekennzeichnet, dass** das Befestigungsmittel (5) sich im Wesentlichen von einer Oberflächenseite zur anderen erstreckt.

5. Isolationsprodukt, entsprechend der vorstehenden Ansprüche, **dadurch gekennzeichnet, dass** das Befestigungsmittel (5) ein Draht ist.

6. Isolationsprodukt, entsprechend der vorstehenden Ansprüche, **dadurch gekennzeichnet, dass** das Befestigungsmittel (5) einen Durchmesser von 0,3 - 1,5 mm hat.

7. Isolationsprodukt, entsprechend der vorstehenden Ansprüche, **dadurch gekennzeichnet, dass** das Befestigungsmittel in Form einer Welle, bevorzugt einer Sinus-, Sägezahn- oder Rechteckwelle gebogen ist.

8. Isolationsprodukt, entsprechend der vorstehenden Ansprüche, **dadurch gekennzeichnet, dass** das Befestigungsmittel (5) aus Metall, bevorzugt aus Stahl besteht.

9. Isolationsprodukt, entsprechend der vorstehenden Ansprüche, **dadurch gekennzeichnet, dass** das Befestigungsmittel eine Stärke von 70-700 N/mm² aufweist.

10. Isolationsprodukt, entsprechend der vorstehenden Ansprüche, **dadurch gekennzeichnet, dass** das Befestigungsmittel (5) mit einer Zugkraft von 7-15 N um 25-75 % verlängerbar ist.

11. Isolationsprodukt, entsprechend der vorstehenden Ansprüche, **dadurch gekennzeichnet, dass** mindestens eine der Hauptoberflächen des Produkts aus einer abdeckenden Schicht besteht, die aus einer Folie besteht.

12. Isolationsprodukt, entsprechend der vorstehenden Ansprüche, **dadurch gekennzeichnet, dass** mindestes eine der abdeckenden Schichten der Hauptoberflächen des Produkts aus einem Netz oder Maschendraht besteht.

13. Isolationsprodukt, entsprechend der vorstehenden Ansprüche, **dadurch gekennzeichnet, dass** das Befestigungsmittel (5) zwischen dem abdeckenden und dem isolierenden Material angeordnet ist.

14. Isolationsprodukt, entsprechend der vorstehenden Ansprüche, **dadurch gekennzeichnet, dass** sich die Befestigungsmittel (5) außen an der abdeckenden Schicht befinden und mindestens indirekt daran angebracht sind.

15. Isolationsprodukt, entsprechend der vorstehenden Ansprüche, **dadurch gekennzeichnet, dass** das Befestigungsmittel (5) in die abdeckende Schicht eingewebt ist.

16. Isolationsprodukt, entsprechend der vorstehenden Ansprüche, **dadurch gekennzeichnet, dass** das Isolationsmaterial aus Mineralfasern besteht.

17. Verwendung des Isolationsproduktes entsprechend der Ansprüche 1 - 16 für Isolierzwecke, besonders für die Isolierung von ringförmigen Strukturen.

18. Prozess der Befestigung eines Isolationsproduktes, indem es an einem Element angebracht wird, das Produkt weist zwei Hauptoberflächen und mehrere Seitenoberflächen auf und besteht aus einer Isolationsschicht und einem oder mehreren verlängerbaren Elementen, die sich in eine Richtung im Wesentlichen parallel zu mindestens einer der Hauptoberflächen und im Wesentlichen zu mindestens einer der Seitenoberflächen erstreckt, der Prozess besteht aus den Stufen
a) Ergreifen eines Teils des Elements an der Seitenoberfläche,
b) Ziehen des Teils zur Verlängerung des Elements, damit es über die Seitenoberfläche hervorsteht,
c) Befestigung des Produkts, indem das vorstehende Teil an das Element angebracht wird.

19. Prozess entsprechend des Anspruchs 18, **dadurch gekennzeichnet, dass** das Element bearbeitet wurde, um am vorstehenden Teil einzurasten

20. Prozess entsprechend des Anspruchs 18 oder 19, **dadurch gekennzeichnet, dass** dieser Schritt des Befestigens des Produkts ausgeführt wird, indem das vorstehende Teil an das Element angebracht wird, indem das vorstehende Teil befestigt oder angebunden bzw. umwickelt oder das vorstehende Teil um ein geeignetes Teil des benachbarten Elements gedreht wird.

21. Prozess entsprechend der Ansprüche 18 - 20, **dadurch gekennzeichnet, dass** es des weiteren den Schritt des Schneidens des Produkts umfasst, damit es zur Peripherie einer ringförmigen Struktur passt, bevor das Produkt an der Struktur befestigt wird.

22. Prozess entsprechend der Ansprüche 18 - 21, **dadurch gekennzeichnet, dass** das Element Teil des Produkts selbst formt.

23. Prozess entsprechend der Ansprüche 18 - 21, **dadurch gekennzeichnet, dass** das benachbarte Element im Wesentlichen ein identisches Produkt ist.

24. Prozess entsprechend der Ansprüche 18 - 23, **dadurch gekennzeichnet, dass** das Element verlängert wird, um mindestens 5 cm über der Grenze der Isolierschicht hervorzustehen.

25. Prozess entsprechend der Ansprüche 18 - 24, **dadurch gekennzeichnet, dass** das Isolationsprodukt den Ansprüchen 1 - 15 entspricht und dass das Element ein Befestigungsmittel des Produkts ist.

26. Prozess für die Vorbereitung eines Isolationsproduktes, das mindestens eine im Wesentliche ebene Oberfläche aufweist, die aus einer Isolationsmaterialschicht und einem verlängerbaren Befestigungsmittel besteht, das eine bestimmte Länge aufweist und sich über eine erste Entfernung erstreckt, die im Wesentlichen parallel zur Oberfläche verläuft, wo der Prozess aus dem Schritt besteht, bei dem mindestens das Befestigungsmittel mindestens indirekt am Isolationsmaterial angebracht wird, **dadurch gekennzeichnet, dass** das Befestigungsmittel in solche eine Form gebracht wurde, dass die tatsächliche Länge des Mittels mindestens 5 % länger als die erste Entfernung und in solch einer Art ist, dass das Befestigungsmittel durch Ziehen mindestens teilweise über die erste Entfernung hinaus verlängert werden kann.

27. Prozess entsprechend des Anspruchs 26, **dadurch gekennzeichnet, dass** das Befestigungsmittel in Form einer Welle gebogen ist.

28. Prozess entsprechend der Ansprüche 26 oder 27, **dadurch gekennzeichnet, dass** die Wellenform im Wesentlichen eine Sinus-, Sägezahn oder Rechteckwelle beschreibt.

29. Prozess entsprechend der Ansprüche 26 - 28, **dadurch gekennzeichnet, dass** das Befestigungsmittel zwischen einem Paar ineinander verzahnter Zahnräder übertragen wird.

30. Prozess entsprechend der Ansprüche 26 - 29, **dadurch gekennzeichnet, dass** das Befestigungsmittel in Schleifen gewunden ist.

31. Vorrichtung zur Anwendung des Befestigungsmittels (5) an einem Isolationsprodukt, bestehend aus den Mitteln zur Übertragung des Isolationsprodukts, bestehend aus einer Isolationsmaterialschicht (1), Mittel (6) für die Dispension eines verlängerbaren Befestigungsmittels (5) und optionale Führung, um das Befestigungsmittel (5) in Kontakt mit dem Isolationsprodukt zu bringen, **dadurch gekennzeichnet, dass** die Vorrichtung mindestens aus einem Paar von mindestens teilweise verzahnten Zahnrädern (8', 8''), durch die das Befestigungsmittel passiert, optionaler Führung zur Übertragung des Befestigungsmittels (5) zwischen den Zahnrädern (8', 8'') zur Sicherung des Befestigungsmittels (5) am Produkt mindestens indirekt in solch einer Weise besteht, dass die Ausdehnung des Befestigungsmittels (5) in eine erste Richtung verlängert werden kann, indem im Wesentlichen an einem Ende des Befestigungsmittels (5) gezogen wird.

## Revendications

1. Produit isolant ayant deux surfaces principales et une épaisseur entre lesdites surfaces et comprenant une couche (1) d'un matériau isolant et au moins un moyen de fixation allongé (5) pour fixer le produit, ledit moyen de fixation (5) s'étendant dans une première direction essentiellement parallèle à au moins l'une des surfaces principales, où ledit moyen s'étend au maximum partiellement dans la direction de l'épaisseur du produit, **caractérisé en ce que** l'étendue du moyen de fixation (5) dans ladite première direction peut être augmentée sensiblement par une traction sur au moins une extrémité du moyen de fixation (5).

2. Produit isolant selon la revendication 1, **caractérisé en ce que** le moyen de fixation (5) s'étend à moins de 90 % dans la direction de l'épaisseur de la couche isolante (1).

3. Produit isolant selon l'une quelconque des revendications précédentes, **caractérisé en ce que** le moyen de fixation (5) est susceptible d'être étendu d'au moins 5 % par une traction à la main dans ladite direction.

4. Produit isolant selon l'une quelconque des revendications précédentes, **caractérisé en ce que** le moyen de fixation (5) s'étend essentiellement depuis une surface latérale jusqu'à l'autre.

5. Produit isolant selon l'une quelconque des revendications précédentes, **caractérisé en ce que** le moyen de fixation (5) est un fil.

6. Produit isolant selon la revendication 5, **caractérisé en ce que** le moyen de fixation (5) a un diamètre de 0,3 à 1,5 mm.

7. Produit isolant selon la revendication 5, **caractérisé en ce que** le moyen de fixation est courbé dans la forme d'une vague, de préférence une vague sinusoïdale, en dents de scie ou rectangulaire.

8. Produit isolant selon l'une quelconque des revendications précédentes, **caractérisé en ce que** le moyen de fixation (5) comprend un métal, de préférence l'acier.

9. Produit isolant selon l'une quelconque des revendications précédentes, **caractérisé en ce que** le moyen de fixation (5) a une force de 70 à 700 N/mm².

10. Produit isolant selon l'une quelconque des revendications précédentes, **caractérisé en ce que** le moyen de fixation (5) est extensible de 25 à 75 % par une traction de 7 à 15 N.

11. Produit isolant selon l'une quelconque des revendications précédentes, **caractérisé en ce que** le produit comprend au moins sur l'une de ses surfaces principales une couche de recouvrement comprenant une feuille.

12. Produit isolant selon l'une quelconque des revendications précédentes, **caractérisé en ce que** le produit comprend au moins sur l'une de ses surfaces principales une couche de recouvrement comprenant une toile ou un grillage de basse-cour.

13. Produit isolant selon l'une quelconque des revendications précédentes, **caractérisé en ce que** le moyen de fixation (5) est disposé entre le recouvrement et le matériau isolant.

14. Produit isolant selon l'une quelconque des revendications précédentes, **caractérisé en ce que** les moyens de fixation (5) sont disposés à l'extérieur du recouvrement et au moins indirectement reliés à celui-ci.

15. Produit isolant selon l'une quelconque des revendications précédentes, **caractérisé en ce que** le moyen de fixation (5) est tissé dans le recouvrement.

16. Produit isolant selon l'une quelconque des revendications précédentes, **caractérisé en ce que** le matériau isolant comprend des fibres minérales.

17. Utilisation du produit isolant selon les revendications 1 à 16 à des fins d'isolation, en particulier pour l'isolation de structures annulaires.

18. Procédé de montage d'un produit isolant en le fixant sur un composant, ledit produit ayant deux surfaces principales et un certain nombre de surfaces latérales et comprenant une couche isolante et un ou plusieurs éléments extensibles s'étendant dans une direction essentiellement parallèle à au moins l'une des surfaces principales et essentiellement jusqu'à au moins une surface latérale, ledit procédé comprenant les étapes consistant à :
a) saisir une partie dudit élément sur la surface latérale ;
b) tirer la partie afin d'étendre l'élément de manière à obtenir une saillie au-delà de la surface latérale ;
c) fixer le produit en reliant la partie en saillie sur le composant.

19. Procédé selon la revendication 18, **caractérisé en ce que** le composant est conçu pour s'engager avec la partie en saillie.

20. Procédé selon l'une quelconque des revendications 18 ou 19, **caractérisé en ce que** l'étape consistant à fixer le produit en reliant la partie en saillie sur le composant est réalisée en nouant ou en ligaturant la partie en saillie sur une partie appropriée du composant connexe, et/ou en enroulant ou en torsadant la partie en saillie autour d'une telle partie.

21. Procédé selon les revendications 18 à 20, **caractérisé en ce qu'**il comprend en outre l'étape consistant à couper le produit afin de correspondre à la circonférence d'une structure annulaire préalablement au montage du produit sur ladite structure.

22. Procédé selon les revendications 18 à 21, **caractérisé en ce que** le composant fait partie du produit lui-même.

23. Procédé selon les revendications 18 à 21, **caractérisé en ce que** le composant connexe est un produit essentiellement identique.

24. Procédé selon les revendications 18 à 23, **caractérisé en ce que** l'élément est étendu pour faire saillie d'au moins 5 cm au-delà de la limite de la couche isolante.

25. Procédé selon les revendications 18 à 24, **caractérisé en ce que** le produit isolant est conforme à l'une quelconque des revendications 1 à 15 et **en ce que** ledit élément est un moyen de fixation du produit.

26. Procédé pour la préparation d'un produit isolant ayant au moins une surface essentiellement plane comprenant une couche d'un matériau isolant et un moyen de fixation allongé ayant une certaine longueur et s'étendant sur une première distance dans une direction essentiellement parallèle à la surface, où le procédé comprend l'étape consistant à relier au moins partiellement le moyen de fixation, au moins indirectement, sur le matériau isolant, **caractérisé en ce que** le moyen de fixation est coupé dans une forme telle que la longueur réelle du moyen est au moins 5 % supérieure à la première distance et de telle sorte que le moyen de fixation peut être dressé au moins partiellement par une traction afin de s'étendre au-delà de ladite première distance.

27. Procédé selon la revendication 26, **caractérisé en ce que** le moyen de fixation est courbé dans la forme d'une vague.

28. Procédé selon l'une quelconque des revendications 26 ou 27, **caractérisé en ce que** la forme de vague décrit essentiellement une vague sinusoïdale, en dents de scie ou rectangulaire.

29. Procédé selon les revendications 26 à 28, **caractérisé en ce que** le moyen de fixation est transporté entre une paire de roues dentées engagées l'une dans l'autre.

30. Procédé selon les revendications 26 à 29, **caractérisé en ce que** le moyen de fixation est bobiné en boucles.

31. Appareil pour appliquer un moyen de fixation (5) sur un produit isolant comprenant un moyen pour transporter un produit isolant comprenant une couche de matériau isolant (1), un moyen (6) pour délivrer un moyen de fixation allongé (5) et des guides facultatifs pour mettre le moyen de fixation (5) en contact avec le produit isolant, **caractérisé en ce que** ledit appareil comprend au moins une paire de roues dentées (8', 8'') au moins partiellement engagées entre lesquelles passe le moyen de fixation, des guides facultatifs pour passer le moyen de fixation (5) entre lesdites roues dentées (8', 8''), un moyen pour attacher le moyen de fixation (5) sur le produit au moins indirectement de telle sorte que l'étendue du moyen de fixation (5) peut être augmentée dans une première direction essentiellement par une traction sur au moins une extrémité du moyen de fixation.
